# EUROPEAN PATENT APPLICATION

(11) **EP 4 671 956 A1**
(43) Date of publication of application: **31.12.2025**
(21) Application number: 25157027.1
(22) Date of filing: 11.02.2025
(51) Int. Cl.: G06F 3/12

(54) **COMMUNICATION CONTROL DEVICE, IMAGE PROCESSING APPARATUS, AND PROGRAM**

(30) Priority: 26.06.2024 JP 2024103289
(71) Applicant: FUJIFILM Business Innovation Corp., Minato-ku Tokyo (JP)
(72) Inventor: ADEGAWA, Tomomichi, Yokohama-shi, Kanagawa (JP)
(74) Representative: Kurig, Thomas

(57) **Abstract**

A communication control device includes a processor configured to: when the communication control device recognizes an external device via one network under an environment including a plurality of networks, identify the one network among the plurality of networks as a network used for communication between the communication control device and the external device; and enable data communication with the external device based on information on a user that performs the data communication with the external device and the one network identified.

## Description

### Background

### (i) Technical Field

The present disclosure relates to a communication control device, an image processing apparatus, and a program.

### (ii) Related Art

A plurality of networks may be connected to a multifunction peripheral. A security requirement for a multifunction peripheral to which a plurality of networks are connected may include no data exchange between the plurality of networks. In this case, it is necessary to execute data communication between specific networks, and the multifunction peripheral is required to identify a network to which an external device as a communication destination is connected.

Japanese Unexamined Patent Application Publication No. 2012-34298 discloses an image reading device for reading an image in accordance with a read instruction issued from an information processing device, and transmitting the read image data to the information processing device, the image reading device including a reception unit that receives, from the information processing device, specifying information used to specify a setting associated with reading set by the information processing device, a register unit that registers the specifying information received by the reception unit, and identification information used to identify the information processing device having transmitted the specifying information, in association with a specific key, a sending unit that sends a read instruction issue request to the information processing device indicated by the identification information, in accordance with the specifying information registered in association with the specific key, in response to an operation of the specific key, and an image transmission unit that reads an image in accordance with a read instruction sent from the information processing device in response to the read instruction issue request sent by the sending unit, and transmits image data obtained from the image to the information processing device.

According to Japanese Unexamined Patent Application Publication No. 2012-34298, when a multifunction peripheral as an example of an image reading device performs data communication, the multifunction peripheral receives, from a host personal computer (information processing device), interface information for identifying an interface for connecting the multifunction peripheral and the host personal computer, and performs data communication via the interface.

### Summary

An image processing apparatus needs to acquire network information for identifying a network connecting the image processing apparatus with an external device in order to perform data communication between the image processing apparatus and the external device. A method of acquiring the network information includes a method in which the image processing apparatus receives the network information from an external device. In this case, it is necessary to provide the external device with a unit for transmitting the network information.

Accordingly, it is an object of the present disclosure to make it possible to select a network for a communication destination without receiving network information from an external device, as compared with a case where an external device is provided with a unit for transmitting network information for identifying a network for connecting a host apparatus and the external device.

According to a first aspect of the present disclosure, there is provided a communication control device including a processor configured to: when the communication control device recognizes an external device via one network under an environment including a plurality of networks, identify the one network among the plurality of networks as a network used for communication between the communication control device and the external device; and enable data communication with the external device based on information on a user that performs the data communication with the external device and the one network identified.

According to a second aspect of the present disclosure, in the communication control device according to the first aspect, the processor may be configured to make a storage device store information on the external device recognized and the one network identified in association with each other.

According to a third aspect of the present disclosure, in the communication control device according to the first or second aspect, the processor may be configured to determine whether the data communication is able to be performed, based on information on a network associated with the user that performs the data communication with the external device, and the one network identified.

According to a fourth aspect of the present disclosure, in the communication control device according to any one of the first to third aspects, the processor may be configured to determine that the data communication is able to be performed when the one network identified is included in the network associated with the user that performs the data communication with the external device.

According to a fifth aspect of the present disclosure, in the communication control device according to any one of the first to fourth aspects, the processor may be configured to output, regarding the external device connected to a network associated with the user that performs the data communication with the external device, information for identifying the external device and a content of processing in the external device.

According to a sixth aspect of the present disclosure, in the communication control device according to any one of the first to fifth aspects, the processor may be configured to output, regarding the external device associated with a user that has logged in to the communication control device, information for identifying the external device and a content of processing in the external device.

According to a seventh aspect of the present disclosure, there is provided an image processing apparatus including: the communication control device according to any one of the first to the sixth aspects; and an image reading device.

According to an eighth aspect of the present disclosure, there is provided a program causing a computer configured to control an image processing apparatus to execute process including: when the image processing apparatus recognizes an external device via one network under an environment including a plurality of networks, identifying the one network among the plurality of networks as a network used for communication between the image processing apparatus and the external device; and enabling data communication with the external device based on information on a user that performs the data communication with the external device and the one network identified.

According to the first aspect of the present disclosure, as compared with a case where the external device is provided with a unit for transmitting network information for identifying a network via which the communication control device is connected to the external device, a network serving as a communication destination can be selected without receipt of the network information from the external device.

According to the second aspect of the present disclosure, a step of a process related to data communication can be omitted, as compared with a case where the network information is acquired when data communication is performed.

According to the third aspect of the present disclosure, the external device capable of performing data communication with the communication control device can be distinguished.

According to the fourth aspect of the present disclosure, the external device capable of performing data communication with the communication control device can be distinguished based on the network associated with the user that performs data communication with the external device.

According to the fifth aspect of the present disclosure, only the external device connected to the network associated with the user that performs data communication with the external device can be displayed.

According to the sixth aspect of the present disclosure, only the external device associated with the user that performs data communication with the external device can be displayed.

According to the seventh aspect of the present disclosure, the image processing apparatus can be provided which is capable of, as compared with a case where the external device is provided with a unit for transmitting network information for identifying a network via which the communication control device is connected to the external device, selecting a network serving as a communication destination without receipt of the network information from the external device.

According to the eighth aspect of the present disclosure, in a computer on which the program of the eighth aspect of the present disclosure is installed, as compared with a case where the external device is provided with a unit for transmitting network information for identifying a network via which the image processing apparatus is connected to the external device, a network serving as a communication destination can be selected without receipt of the network information from the external device.

### Brief Description of the Drawings

Exemplary embodiments of the present disclosure will be described in detail based on the following figures, wherein:
Fig. 1 is a diagram illustrating a configuration example of a communication control system including a communication control device to which the present exemplary embodiment is applied;
Fig. 2 is a diagram illustrating a configuration example of an image processing apparatus;
Fig. 3 is a diagram illustrating an example of a functional configuration of the image processing apparatus;
Fig. 4 is a diagram illustrating an example of terminal device information;
Fig. 5 is a diagram illustrating an example of user information;
Fig. 6 is a diagram illustrating a hardware configuration example of a terminal device;
Fig. 7 is a flowchart illustrating a flow of communication control by the image processing apparatus;
Fig. 8 is a flowchart illustrating a flow of determination processing;
Fig. 9 is a diagram illustrating an example of a display list;
Fig. 10A is a diagram illustrating an example of an operation screen displayed to a user 1,
Fig. 10B is a diagram illustrating an example of an operation screen displayed to a user 2;
Fig. 11 is a diagram illustrating an example of information stored in a storage unit according to a modification;
Fig. 12 is a flowchart illustrating a flow up to generation of a display list according to the modification; and
Fig. 13 is a diagram illustrating an example of a display list according to the modification.

### Detailed Description

Exemplary embodiments of the present disclosure will be described below in detail with reference to the accompanying drawings.

### <Configuration of communication control system>

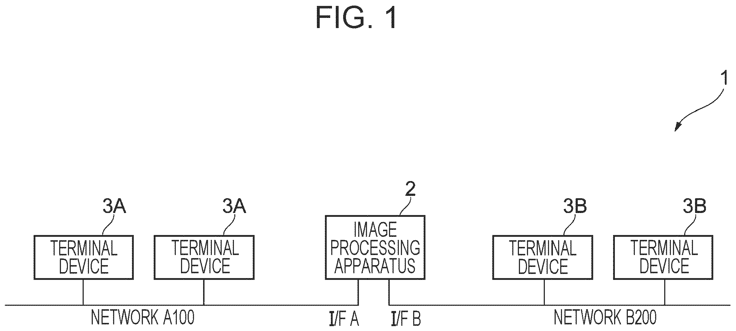

Fig. 1 is a diagram illustrating a configuration example of a communication control system 1 including a communication control device to which the present exemplary embodiment is applied.

Consider a system in which a terminal device such as a personal computer (PC) detects an image processing apparatus on a network and communicates with the detected image processing apparatus. In such a system, for example, image data obtained by a scan function of the image processing apparatus can be transmitted to a terminal device that is a communication destination. An example of a system having this function includes a Web Services on Devices (WSD) scan system, for example. In the WSD scan system, a terminal device as the communication destination can instruct the image processing apparatus to execute scanning and transmit data to the terminal device. The instruction for the execution of scanning and the transmission of data to the terminal device as the communication destination can be issued from the image processing apparatus. The present exemplary embodiment is applicable to, for example, a case where the image processing apparatus instructs the execution of scanning and transmits data to the terminal device as the communication destination in the WSD scan system.

In the configuration example illustrated in Fig. 1, the communication control system 1 includes an image processing apparatus 2 including a communication control device, and terminal devices 3A and 3B that are examples of external devices. The image processing apparatus 2 illustrated in Fig. 1 includes a plurality of communication interfaces (I/F A and I/F B) and is connected to a plurality of networks. In Fig. 1, the image processing apparatus 2 is connected to two networks (network A100 and network B200). In Fig. 1, two terminal devices 3A are connected to the network A100, and two terminal devices 3B are connected to the network B200. The number of terminal devices 3A and 3B is not limited to this. The terminal devices 3A and 3B are referred to as a terminal device 3 when they are not distinguished from one another.

### <Configuration of image processing apparatus>

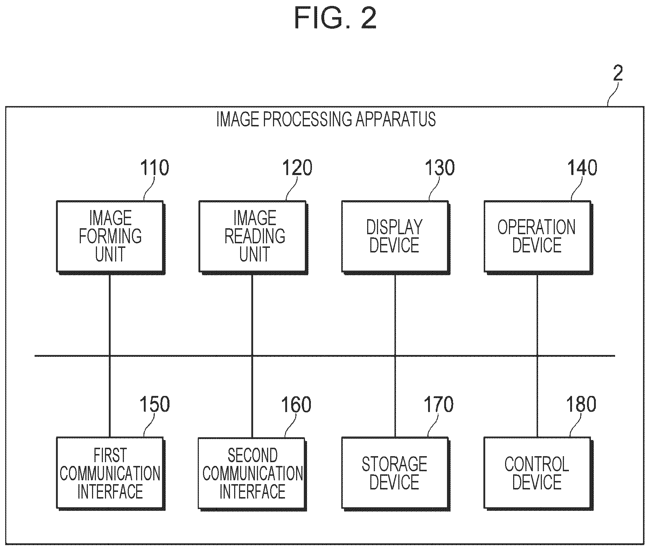

Fig. 2 is a diagram illustrating a configuration example of the image processing apparatus 2.

The image processing apparatus 2 has, for example, a print function, a scan function, a copy function, a facsimile function, and the like. The image processing apparatus 2 includes an image forming unit 110, an image reading unit 120, a display device 130, and an operation device 140. The image processing apparatus 2 includes a first communication interface 150 and a second communication interface 160. The image processing apparatus 2 includes a storage device 170 and a control device 180.

The image forming unit 110 forms an image based on image data on a sheet, which is an example of a recording material, using an image forming material. An example of a method of forming an image on a recording material includes an electrophotographic method in which toner attached to a photosensitive member is transferred onto a recording material to form an image. In addition, an inkjet method in which an image is formed by discharging ink onto a recording material and the like may be used.

The image reading unit 120 is configured by a so-called scanner device, optically reads an image on a set document, and generates data of the read image. As an image reading method, for example, a Charge Coupled Devices (CCD) method is used in which light reflected from a document irradiated with light from a light source is reduced by a lens and received by a CCD. In addition, a Contact Image Sensor (CIS) method may be used in which a CIS receives reflected light that is light emitted from a light emitting diode (LED) light source and sequentially reflected on a document.

The display device 130 displays an information image for presenting various types of information to the user. The display device 130 displays a preview image of an image to be a subject of processing such as reading and output, an operation image for a user to perform an operation, and the like. The display device 130 includes, for example, a liquid crystal display. The display device 130 and the operation device 140 may be used in combination as a user interface unit for the user to input and output information to and from the image processing apparatus 2.

The operation device 140 is a device for a user to perform operations such as input of commands and data. The operation device 140 includes, for example, a hardware key, a touch sensor that outputs a control signal corresponding to a position pressed or touched by a finger or the like, and the like. A touch panel may be configured in which a touch sensor and a liquid crystal display forming the display device 130 are combined.

The first communication interface 150 is an interface for transmitting and receiving commands and data to and from an external device. The first communication interface 150 is a communication interface used for connection to the network A100. In the present exemplary embodiment, the image processing apparatus 2 includes the second communication interface 160. The second communication interface 160 is a communication interface used for connection to the network B200. While the image processing apparatus 2 according to the present exemplary embodiment includes the two communication interfaces 150 and 160, the present disclosure is not limited thereto.

The storage device 170 stores programs to be executed by the control device 180 and data. Further, the storage device 170 stores data of an image read by the image reading unit 120 and the like, log data generated by various operations, and other various types of data. The storage device 170 is realized by, for example, a storage device such as a magnetic disk device or a solid state drive (SSD).

The control device 180 is an example of a communication control device and includes a processor as an arithmetic unit and a memory as a storage unit. The processor controls the image processing apparatus 2 by loading a program stored in the storage device 170 into the memory and executing the program. As the processor, in addition to a central processing unit (CPU), a micro processing unit (MPU), a graphics processing unit (GPU), a digital signal processor (DSP), or the like is used. As the memory, for example, a dynamic random access memory (DRAM) or the like is used.

### <Functional configuration of image processing apparatus>

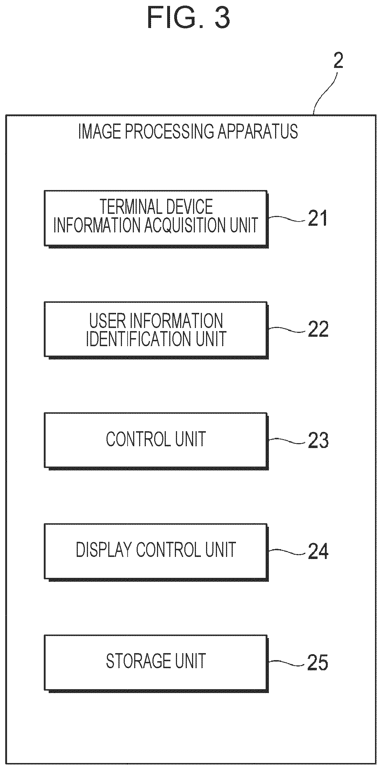

Fig. 3 is a diagram illustrating an example of a functional configuration of the image processing apparatus 2.

The image processing apparatus 2 includes a terminal device information acquisition unit 21, a user information identification unit 22, a control unit 23, a display control unit 24, and a storage unit 25.

The functions of the terminal device information acquisition unit 21 are realized by a CPU as an example of the processor loading a program onto the memory and executing the program. The terminal device information acquisition unit 21 acquires information (hereinafter, also referred to as "terminal device information") on the terminal device 3 connected to the host apparatus (the image processing apparatus 2) via the network. More specifically, when the user operates the terminal device 3 to detect the image processing apparatus 2 connected to the network, data is exchanged between the terminal device 3 and the image processing apparatus 2. Accordingly, in the image processing apparatus 2, the terminal device information acquisition unit 21 recognizes the terminal device 3 that has detected the host apparatus as the terminal device 3 that is the communication destination. Then, the terminal device information acquisition unit 21 identifies the network connecting the host apparatus and the terminal device 3 as the network used for the communication between the host apparatus and the terminal device 3. At this time, the terminal device information acquisition unit 21 acquires information on the terminal device 3 recognized as the communication destination. The information on the terminal device 3 is, for example, information for identifying the terminal device 3, and includes address information of the terminal device 3 and the like. The terminal device information acquired by the terminal device information acquisition unit 21 is stored in the storage unit 25 together with the information on the identified network.

The functions of the user information identification unit 22 are realized by a CPU as an example of the processor loading a program onto the memory and executing the program. The user information identification unit 22 authenticates a user who uses the image processing apparatus 2 and identifies information on the user (hereinafter, also referred to as "user information"). The user information identification unit 22 receives, for example, a user ID and a password for identifying the user, and performs login authentication. Then, when the login authentication is successful, the user information identification unit 22 refers to the storage unit 25 and identifies information on the user stored in association with the user ID and the password. The information on the user will be described later.

The functions of the control unit 23 are realized by a CPU as an example of the processor loading a program onto the memory and executing the program. The control unit 23 controls various operations of the image processing apparatus 2. In addition, the control unit 23 of the present exemplary embodiment determines whether data communication with the terminal device 3 is possible based on information on a user who performs data communication with the terminal device 3 and network information used for communication between the host apparatus and the terminal device 3. Details of the determination on whether data communication is possible will be described later.

The functions of the display control unit 24 are realized by a CPU as an example of the processor loading a program onto the memory and executing the program. The display control unit 24 controls display of an operation image for a user to perform an operation or the like.

The functions of the storage unit 25 are realized by the storage device 170 (see Fig. 2). The storage unit 25 stores programs to be executed by the control unit 23 and data. The storage unit 25 stores various types of information such as image data read by the image reading unit 120 (see Fig. 2). The storage unit 25 stores terminal device information and user information.

### <Information on terminal device>

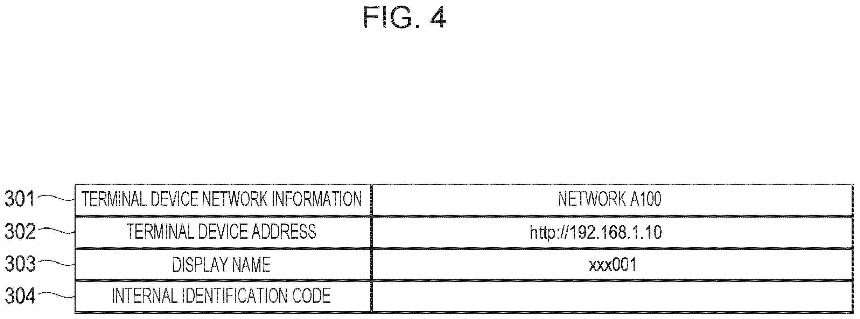

Fig. 4 is a diagram illustrating an example of the terminal device information.

The storage unit 25 stores the terminal device information as described above. Fig. 4 illustrates a network information field 301 for the terminal device 3 and an address information field 302 for the terminal device 3. Further, a display name field 303 to be displayed to the user and an internal identification code field 304 are illustrated.

The network information field 301 stores information on the network used for communication between the host apparatus and the terminal device 3, identified by the terminal device information acquisition unit 21. The address information field 302 stores address information of the terminal device 3. The display name field 303 stores a display name for identifying the terminal device 3 for the user who uses the image processing apparatus 2. The internal identification code field 304 stores information arbitrarily determined by the operating system of the terminal device 3. The storage unit 25 manages the above-described information for each terminal device 3 connected to the host apparatus.

In Fig. 4, as an example, information on one terminal device 3 is illustrated. For example, "network A100" is displayed in the network information field 301. This indicates that the network used for communication between the host apparatus and the terminal device 3 is the network A100. In the address information field 302, "http://192.168.1.10" is displayed. This is the address information of one terminal device 3, and indicates a destination on the network. Further, "xxx001" is displayed in the display name field 303. This indicates a display name for identifying one terminal device 3.

### <Information on user>

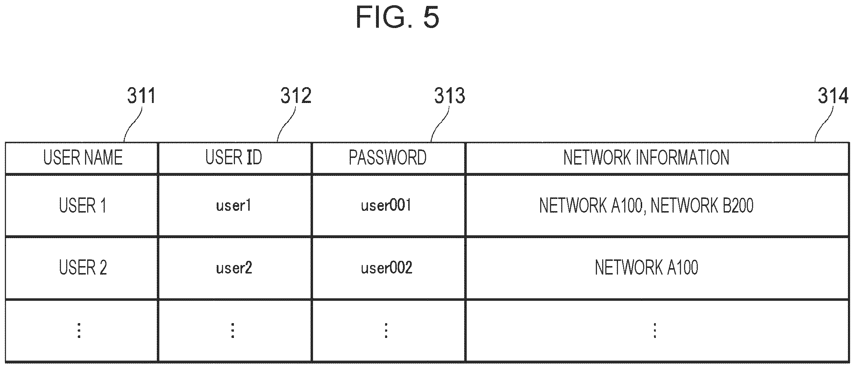

Fig. 5 is a diagram illustrating an example of user information.

The storage unit 25 stores information on the user who uses the image processing apparatus 2. The information on the user may be set in advance by an administrator or the like of the communication control system 1. In Fig. 5, a user name field 311, a user ID field 312, a password field 313, and a network information field 314 associated with the user are illustrated. The user ID is an ID for identifying a user. The password is a personal identification number for user authentication set for each user. The network information associated with the user indicates a network that the user is authorized to use. The storage unit 25 manages the above information for each user who uses the image processing apparatus 2.

In Fig. 5, as an example, information on a user 1 and information on a user 2 are illustrated. As the information on the user 1, "user 1" is displayed in the user name field 311. Further, "user1" is displayed in the user ID field 312. Further, "user001" is displayed in the password field 313. Further, "network A100, network B200" is displayed in the network information field 314. That is, "network A100 and network B200" are stored as the networks available to the user 1 when the user 1 uses the image processing apparatus 2.

In Fig. 5, "user 2" is displayed in the user name field 311 as information on the user 2. Further, "user2" is displayed in the user ID field 312. Further, "user002" is displayed in the password field 313. Further, "network A100" is displayed in the network information field 314. That is, the "network A100" is stored as the network available to the user 2 when the user 2 uses the image processing apparatus 2.

Next, the terminal device 3 will be described.

The terminal device 3 is an information processing device that performs data communication with the image processing apparatus 2 to transmit and receive data. For example, the terminal device 3 receives image data obtained by executing scanning by the image processing apparatus 2. Then, the terminal device 3 can execute various types of processing such as storage processing on the received image data. As the terminal device 3, for example, a personal computer or the like is used. Alternatively, a tablet, a smartphone, or the like may be used.

### <Configuration of terminal device>

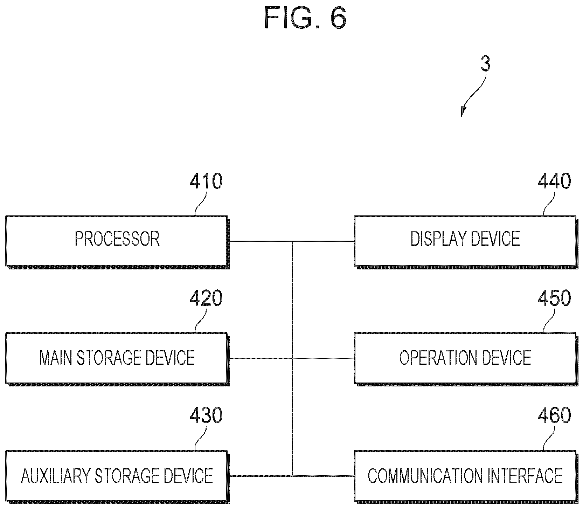

Fig. 6 is a diagram illustrating a hardware configuration example of the terminal device 3.

The terminal device 3 is realized by, for example, a computer as illustrated in Fig. 6. The computer illustrated in Fig. 6 includes a processor 410, a main storage device 420, and an auxiliary storage device 430. The computer illustrated in Fig. 6 includes a display device 440, an operation device 450, and a communication interface 460.

The processor 410 realizes various functions of the terminal device 3 by loading a program stored in the auxiliary storage device 430 onto the main storage device 420 and executing the program. As the processor 410, for example, a CPU, an MPU, a GPU, a DSP, or the like is used. For example, a random access memory (RAM) is used as the main storage device 420. As the auxiliary storage device 430, for example, a magnetic disk, an SSD, or the like is used.

The display device 440 includes, for example, a liquid crystal display, and displays various types of information to a user. For example, a keyboard, a mouse, or the like is used as the operation device 450, and the operation device 450 accepts an input operation by a user. The communication interface 460 is an interface for transmitting and receiving commands and data to and from an external device. In the present exemplary embodiment, the communication interface 460 is connected to any one of a plurality of networks connected to the image processing apparatus 2.

### <Flow of communication control performed in image processing apparatus>

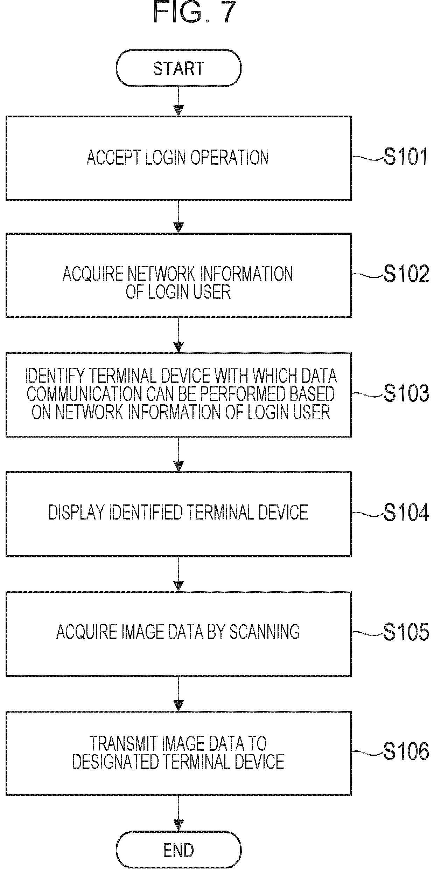

Fig. 7 is a flowchart illustrating a flow of communication control by the image processing apparatus 2.

A case where the user transmits image data obtained by the scan function of the image processing apparatus 2 to the terminal device 3 will be described as an example.

The user information identification unit 22 of the image processing apparatus 2 accepts the login operation from the user who uses the host apparatus (S101). Here, the user information identification unit 22 accepts input of, for example, a user ID and a password. Next, the user information identification unit 22 reads the user information (see Fig. 5) stored in the storage unit 25, and acquires the network information associated with the user who performed the login operation (hereinafter, also referred to as a "login user") (S102).

Upon receiving the scan request from the user, the control unit 23 executes determination processing using the network information associated with the login user acquired in S 102, and identifies the terminal device 3 with which data communication can be performed (S103). This determination processing will be described later.

Then, the display control unit 24 displays the terminal device 3 identified in S 103 on the operation screen of the host apparatus (S104). Next, when the terminal device 3 is selected by the user's operation, the control unit 23 executes the scan function to acquire image data (S105). Then, for the terminal device 3 selected by the user, the image processing apparatus 2 transmits the image data to the destination indicated by the address information of the terminal device 3 (S 106).

It is assumed that the image processing apparatus 2 can instruct the terminal device 3 to execute processing on the transmitted image data. The content of the processing executed by the terminal device 3 includes, for example, processing such as storage of image data and optical character recognition (OCR). In S104, the display control unit 24 displays, as an individual item, each set of the terminal device 3 and the processing executed by the terminal device 3. In S105, selection is performed based on an item displayed in S104 (that is, a set of the terminal device 3 and the processing). The image processing apparatus 2 acquires and holds in advance information of processing executable by the terminal device 3 through information communication with the terminal device 3. Then, when the terminal device 3 is identified in S103, the item displayed in S104 is identified based on the information of the processing executable by the terminal device 3 identified.

### <Flow of determination processing>

The determination processing by the image processing apparatus 2 is executed in order to identify the terminal device 3 with which data communication can be performed with the image processing apparatus 2. In this determination processing, the terminal device 3 with which data communication can be performed is identified using the network information associated with the login user.

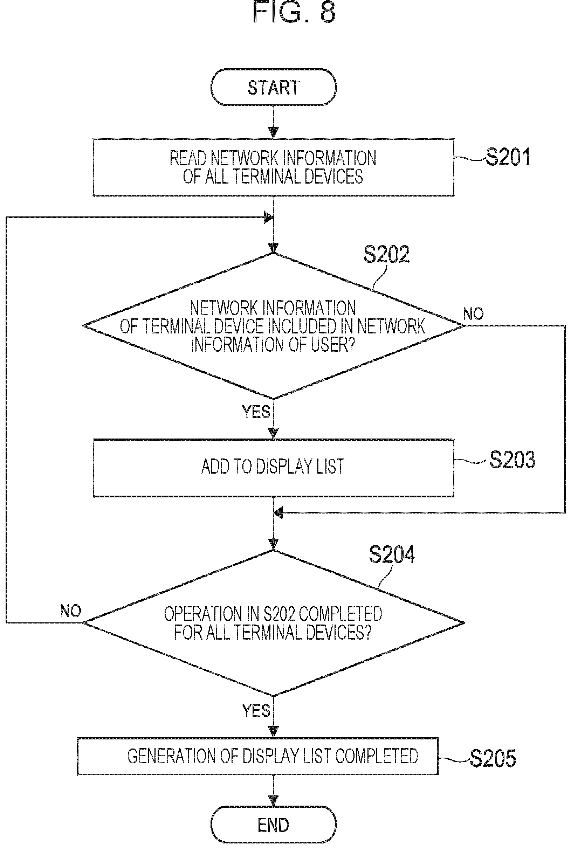

Fig. 8 is a flowchart illustrating the flow of the determination processing.

The control unit 23 reads, from the storage unit 25, information (see Fig. 4) on all of the terminal devices 3 stored in the host apparatus (S201). Next, attention is paid to the network information associated with one terminal device 3 among the terminal devices 3 read. Then, it is determined whether the network information associated with one terminal device 3 is included in the network information associated with the login user acquired in S102 of Fig. 7 (S202).

In a case where the network information associated with one terminal device 3 is included in the network information associated with the login user (YES in S202), the control unit 23 determines that data communication can be performed with the terminal device 3. Then, the terminal device 3 is added to a display list (S203). On the other hand, in a case where the network information associated with the one terminal device 3 is not included in the network information associated with the login user (NO in S202), the control unit 23 determines that data communication cannot be performed with the terminal device 3. Then, the terminal device 3 is not added to the display list, and the processing proceeds to S204.

The control unit 23 confirms whether the operation in S202 has been performed for all of the terminal devices 3 read (S204). When the operation in S202 has not been completed for all of the terminal devices 3 read (NO in S204), the control unit 23 returns to S202 and focuses on one of the unprocessed terminal devices 3. When the control unit 23 confirms that the operation in S202 has been performed for all of the terminal devices 3 read (YES in S204), the generation of the display list is completed (S205).

### <Display list>

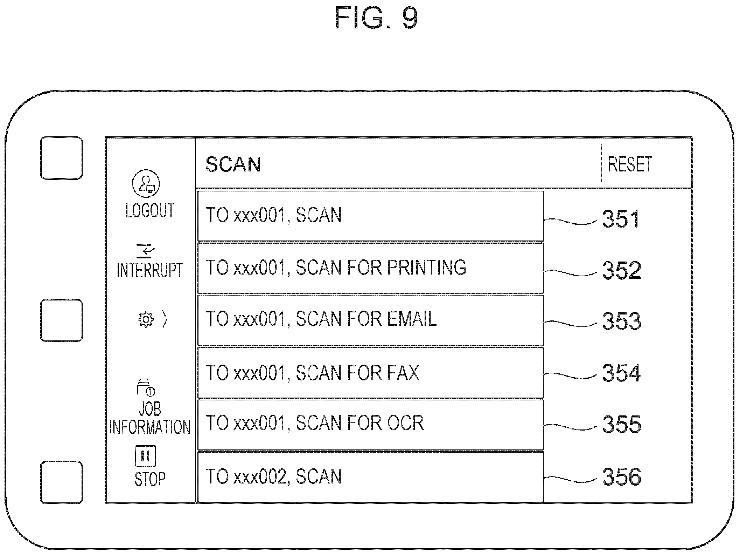

Fig. 9 is a diagram illustrating an example of the display list.

The display control unit 24 uses the display list generated by the control unit 23 to display, on the operation screen of the host apparatus, the terminal device 3 with which data communication can be performed. The operation screen illustrated in Fig. 9 is the screen displayed in S 104 of Fig. 7. On this operation screen, a display name for identifying the terminal device 3 with which data communication can be performed and the contents of processing in the terminal device 3 are displayed. For example, "TO xxx001, SCAN" is displayed in a field 351. In a field 352, "TO xxx001, SCAN FOR PRINTING" is displayed. In a field 353, "TO xxx001, SCAN FOR EMAIL" is displayed. In a field 354, "TO xxx001, SCAN FOR FAX" is displayed. In a field 355, "TO xxx001, SCAN FOR OCR" is displayed. In a field 356, "TO xxx002, SCAN" is displayed.

In Fig. 9, as an example, the terminal device 3 identified by "xxx001" and the terminal device 3 identified by "xxx002", with which data communication is determined to be possible, are displayed. In practice, all of the terminal devices 3 with which data communication can be performed can be displayed on the operation screen. The operation screen can be scrolled by a user's operation. On this operation screen, the user selects the terminal device 3 as the transmission destination and the content of the processing in the terminal device 3. When the terminal device 3 as the transmission destination and the content of the processing in the terminal device 3 are selected, the image data is transmitted to the terminal device 3, and then, for example, processing such as storage of the image data or OCR is performed.

Next, a flow of communication control by the image processing apparatus 2 will be described using a specific example.

First, a specific configuration of a system according to the present exemplary embodiment will be described with reference to Fig. 1. In the configuration example illustrated in Fig. 1, the terminal device 3A is connected to the image processing apparatus 2 via the network A100. When the user operating the terminal device 3A detects the image processing apparatus 2 connected to the network while the terminal device 3A is connected to the network A100, the terminal device 3A and the image processing apparatus 2 exchange data. Through this data exchange, the image processing apparatus 2 recognizes the terminal device 3A that has detected the image processing apparatus 2 as the terminal device 3A as the communication destination. Then, the image processing apparatus 2 identifies the network A100 as a network to be used for communication between the image processing apparatus 2 and the terminal device 3A. When the image processing apparatus 2 recognizes the terminal device 3A as the communication destination terminal device 3A, the image processing apparatus 2 acquires information on the terminal device 3A. The information on the terminal device 3A includes at least address information of the terminal device 3A. Then, the image processing apparatus 2 stores the identified network information "network A100" of the terminal device 3A and the address information of the terminal device 3A in the storage unit 25 in association with each other.

In the configuration example illustrated in Fig. 1, the terminal device 3B is connected to the image processing apparatus 2 via the network B200. When the user operating the terminal device 3B detects the image processing apparatus 2 connected to the network while the terminal device 3B is connected to the network B200, the terminal device 3B and the image processing apparatus 2 exchange data. Through this data exchange, the image processing apparatus 2 recognizes the terminal device 3B that has detected the image processing apparatus 2 as the terminal device 3B as the communication destination. Then, the image processing apparatus 2 identifies the network B200 as a network to be used for communication between the image processing apparatus 2 and the terminal device 3B. When the image processing apparatus 2 recognizes the terminal device 3B as the communication destination terminal device 3B, the image processing apparatus 2 acquires information on the terminal device 3B. The information on the terminal device 3B includes at least address information of the terminal device 3B. Then, the image processing apparatus 2 stores the identified network information "network B200" of the terminal device 3B and the address information of the terminal device 3B in the storage unit 25 in association with each other.

With reference to Figs. 5 and 7, a flow of communication control by the image processing apparatus 2 will be described using operations by the user 1 and the user 2 as an example.

### <Operation by user 1>

First, an example of an operation of the image processing apparatus 2 by the user 1 will be described.

It is assumed that the network information associated with the user 1 is determined in advance as "network A100 and network B200" (see Fig. 5).

Upon receiving a login operation from the user 1 (S101), the image processing apparatus 2 acquires network information associated with the user 1 (S102). Here, the image processing apparatus 2 acquires "network A100 and network B200" as the network information associated with the user 1. Next, upon accepting a scan request from the user 1, the image processing apparatus 2 executes determination processing using the network information associated with the user 1 acquired in S102, and identifies the terminal device 3 with which data communication can be performed (S103). This determination processing is executed through comparison between the network information associated with the terminal device 3 and the network information associated with the user 1. The network information "network A100" associated with the terminal device 3A is included in the network information "network A100 and network B200" associated with the user 1. Further, the network information "network B200" associated with the terminal device 3B is included in the network information "network A100 and network B200" associated with the user 1. Therefore, the image processing apparatus 2 determines that data communication can be performed with each of the terminal devices 3A and 3B. Then, the image processing apparatus 2 displays each of the terminal devices 3A and 3B, identified as the terminal devices 3 with which data communication can be performed, on the operation screen of the image processing apparatus 2 (S104).

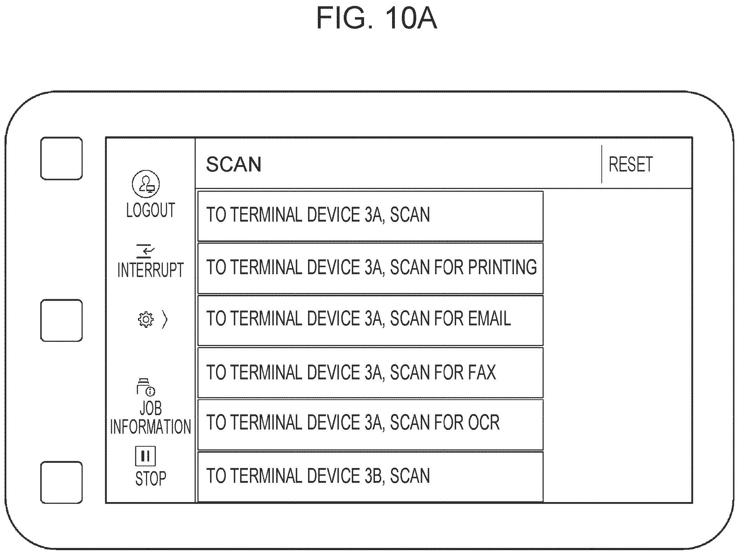

Fig. 10A is a diagram illustrating an example of an operation screen displayed to the user 1.

In the above-described example, the image processing apparatus 2 identifies the terminal device 3A and the terminal device 3B as the terminal devices 3 with which data communication can be performed based on the network information associated with the user 1. Therefore, as illustrated in Fig. 10A, the terminal device 3A and terminal device 3B are displayed on the operation screen of the user 1 as the terminal devices 3 that can be selected by the user 1. When the user 1 selects the terminal device 3A or the terminal device 3B as the transmission destination, the image processing apparatus 2 executes the scan function to acquire image data (S105). Then, the image processing apparatus 2 transmits the image data to the destination indicated by the address information of the terminal device 3A or the terminal device 3B selected (S106).

### <Operation by user 2>

Next, an example of an operation of the image processing apparatus 2 by the user 2 will be described.

It is assumed that the network information associated with the user 2 is determined in advance as "network A100" (see Fig. 5).

Upon receiving a login operation from the user 2 (S101), the image processing apparatus 2 acquires network information associated with the user 2 (S102). Here, the image processing apparatus 2 acquires "network A100" as the network information associated with the user 2. Next, upon accepting a scan request from the user 2, the image processing apparatus 2 executes determination processing using the network information associated with the user 2 acquired in S102, and identifies the terminal device 3 with which data communication can be performed (S103). This determination processing is executed through comparison between the network information associated with the terminal device 3 and the network information associated with the user 2. The network information "network A100" associated with the terminal device 3A is included in the network information "network A100" associated with the user 2. Therefore, the image processing apparatus 2 determines that data communication can be performed with the terminal device 3A. On the other hand, the network information "network B200" associated with the terminal device 3B is not included in the network information "network A100" associated with the user 2. Therefore, the image processing apparatus 2 determines that data communication cannot be performed with the terminal device 3B. Then, the image processing apparatus 2 displays the terminal device 3A, identified as the terminal device 3 with which data communication can be performed, on the operation screen of the image processing apparatus 2 (S104).

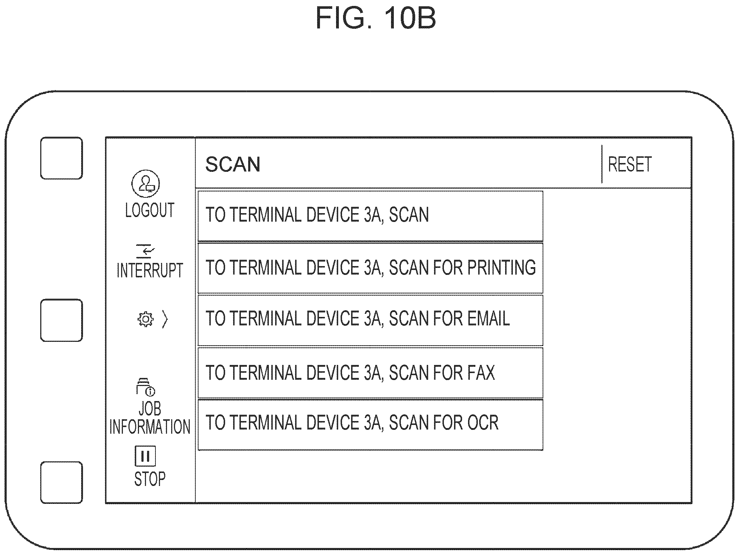

Fig. 10B is a diagram illustrating an example of an operation screen displayed to the user 2.

In the above-described example, the image processing apparatus 2 identifies the terminal device 3A as the terminal device 3 with which data communication can be performed based on the network information associated with the user 2. Therefore, as illustrated in Fig. 10B, only the terminal device 3A is displayed on the operation screen of the user 2, as the terminal device 3 that can be selected by the user 2. When the user 2 selects the terminal device 3A as the transmission destination, the image processing apparatus 2 executes the scan function to acquire image data (S105). Then, the image processing apparatus 2 transmits the image data to the destination indicated by the address information of the terminal device 3A selected (S106).

### <Modification of display list>

Next, a modification of the display list will be described.

In the display list described above, all of the terminal devices 3 included in the network information associated with the login user are displayed on the operation screen. In this modification, only the terminal device 3 associated with the login user is displayed on the operation screen. As a result, the user can more easily select the terminal device 3 as compared with a case where all of the terminal devices 3 included in the network information associated with the login user are displayed. In order to realize this modification, the storage unit 25 stores user information and terminal device information available to the user in association with each other.

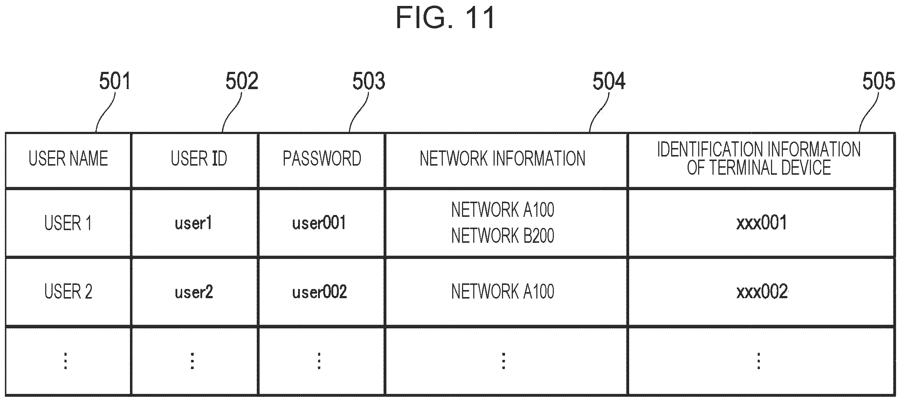

Fig. 11 is a diagram illustrating an example of information stored in the storage unit 25 according to the modification.

In Fig. 11, in addition to a user name field 501, a user ID field 502, a password field 503, and a network information field 504 associated with the user, an identification information field 505 for the terminal device 3 is illustrated. Since the user ID, the password, and the network associated with the user have been described with reference to Fig. 5, a description thereof will be omitted. The identification information of the terminal device 3 is information for identifying the terminal device 3. The identification information of the terminal device 3 is further stored in association with terminal device information (see Fig. 4). The information for identifying the terminal device 3 is not limited as long as the terminal device 3 can be identified. For example, address information of the terminal device 3 or a display name of the terminal device 3 may be used as the identification information of the terminal device 3.

In Fig. 11, as an example, information on the user 1 and information on the user 2 are illustrated. As information on the user 1, "USER 1" is displayed in the user name field 501. Further, "user1" is displayed in the user ID field 502. Further, "user001" is displayed in the password field 503. Further, "NETWORK A100, NETWORK B200" are displayed in the network information field 504 associated with the user 1. Further, "xxx001" is displayed in the identification information field 505 for the terminal device 3. That is, "NETWORK A100, NETWORK B200" are stored as networks associated with the user 1. The terminal device 3 identified by "xxx001" is stored as the terminal device 3 available to user 1.

In Fig. 11, "USER 2" is displayed in the user name field 501 as the information on the user 2. Further, "user2" is displayed in the user ID field 502. Further, "user002" is displayed in the password field 503. Further, "NETWORK A100" is displayed in the network information field 504 associated with the user 2. Further, "xxx002" is displayed in the identification information field 505 for the terminal device 3. That is, "NETWORK A100" is stored as a network associated with the user 2. The terminal device 3 identified by "xxx002" is stored as the terminal device 3 available to user 2.

Next, a flow up to the displaying of the display list in the modification will be described.

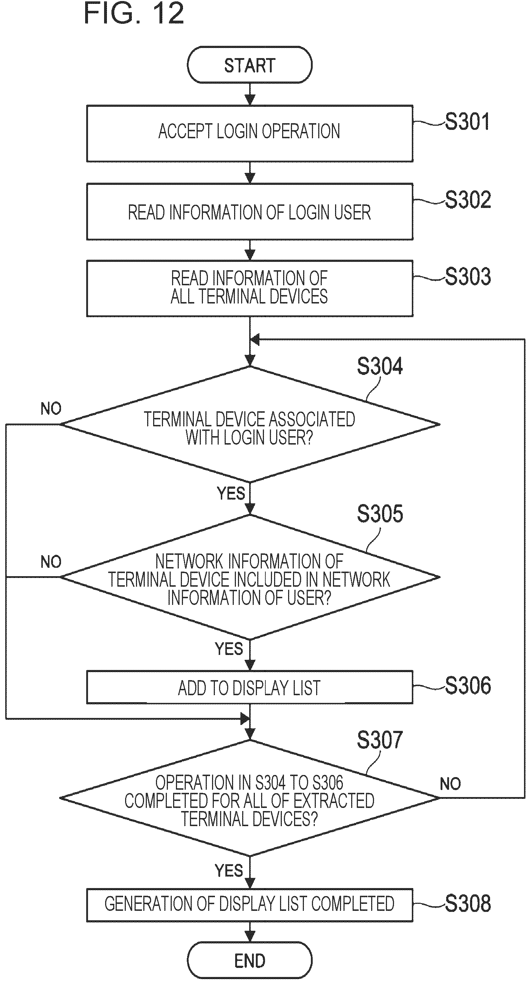

Fig. 12 is a flowchart illustrating the flow up to the generation of the display list in the modification.

The image processing apparatus 2 accepts a login operation from the user who uses the image processing apparatus 2 (S301). Upon accepting the login operation, the image processing apparatus 2 reads information associated with the login user (see Fig. 11) as information stored in the storage unit 25 (S302). Here, the terminal device information of the terminal device 3 associated with the login user and the network information associated with the login user are acquired. Next, upon accepting a scan request from the user, the image processing apparatus 2 reads all of the terminal device information stored in the image processing apparatus 2 from the storage unit 25 (S303). Then, the image processing apparatus 2 focuses on one of the terminal devices 3 read, and confirms whether the terminal device 3 is the terminal device 3 associated with the login user (S304). When the terminal device 3 is the terminal device 3 that is not associated with the login user (NO in S304), the processing proceeds to S307. When the terminal device 3 is the terminal device 3 associated with the login user (YES in S304), the network information associated with the terminal device 3 is focused. Then, the determination processing is executed to confirm whether this network information is included in the network information associated with the login user (S305). When the network information associated with the terminal device 3 is included in the network information associated with the login user (YES in S305), the image processing apparatus 2 determines that data communication can be performed with the terminal device 3. Then, the terminal device 3 is added to the display list (S306). On the other hand, when the network information associated with the terminal device 3 is not included in the network information associated with the login user (NO in S305), the image processing apparatus 2 determines that data communication cannot be performed with the terminal device 3. Then, the processing proceeds to S307 without adding the terminal device 3 to the display list. Next, the image processing apparatus 2 confirms whether the operation in S304 to S306 has been performed for all of the terminal devices 3 read (S307). When the operation in S304 to S306 has not been completed for all of the terminal devices 3 read (NO in S307), the image processing apparatus 2 returns to S304 and focuses on one of the unprocessed terminal devices 3. When the image processing apparatus 2 confirms that the operation in S304 to S306 has been performed for all of the terminal devices 3 read (YES in S307), the generation of the display list is completed (S308).

In the above description, after the terminal device 3 associated with the login user has been identified, it is confirmed whether the network information associated with the terminal device 3 is included in the network information associated with the login user, but this order is not limiting. A configuration may be employed in which after the network information associated with the login user has been identified, the terminal device 3 associated with the login user is identified.

With reference to Fig. 4, Fig. 11, and Fig. 12, the flow up to the generation of the display list in the modification will be described, using the operation of the user 1 as an example.

As illustrated in Fig. 11, the terminal device 3 associated with the user 1 is assumed to be "xxx001". Further, in this example, it is assumed that the information on the terminal device 3 identified by "xxx001" is on the terminal device 3 illustrated in Fig. 4.

The image processing apparatus 2 accepts a login operation from the user 1 (S301). Next, the image processing apparatus 2 reads information associated with the user 1 (see Fig. 11) as information stored in the storage unit 25 (S302). Here, "network A100" is acquired as the terminal device information of "xxx001", which is the terminal device 3 associated with the user 1 (see Fig. 4). Further, "network A100 and network B200" are acquired as the network information associated with the user 1. Next, upon accepting a scan request from the user 1, the image processing apparatus 2 reads all of the terminal device information stored in the image processing apparatus 2 from the storage unit 25 (S303). Then, the image processing apparatus 2 focuses on one of the terminal devices 3 read, and confirms whether the terminal device 3 under focus is "xxx001" associated with the user 1 (S304). When the terminal device 3 under focus is "xxx001" (YES in S304), the image processing apparatus 2 focuses on the network information associated with "xxx001" and executes determination processing to confirm whether the network information is included in the network information associated with the user 1 (S305). The "network A100" associated with "xxx001" is included in the "network A100 and network B200" associated with the user 1 (YES in S305), and thus the image processing apparatus 2 determines that data communication can be performed with "xxx001". Then, "xxx001" is added to the display list (S306). Next, the image processing apparatus 2 confirms whether the operation in S304 to S306 has been performed for all of the terminal devices 3 read (S307). In this example, "xxx001" is the only terminal device 3 associated with the user 1. The image processing apparatus 2 confirms that the operation in S304 to S306 has been performed for all of the terminal devices 3 read (YES in S307), and the generation of the display list is completed (S308).

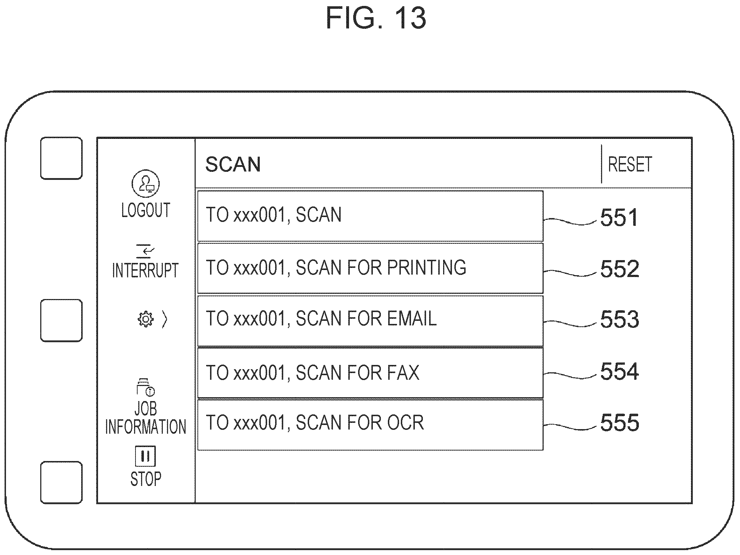

Fig. 13 is a diagram illustrating an example of a display list according to the modification.

In Fig. 13, only "xxx001", which is the terminal device 3 associated with the user 1, is displayed. More specifically, "TO xxx001, SCAN" is displayed in a field 551. In a field 552, "TO xxx001, SCAN FOR PRINTING" is displayed. In a field 553, "TO xxx001, SCAN FOR EMAIL" is displayed. In a field 554, "TO xxx001, SCAN FOR FAX" is displayed. In a field 555, "TO xxx001, SCAN FOR OCR" is displayed.

In this example, since the terminal device 3 associated with the user 1 is the terminal device 3 identified by "xxx001", the determination processing is executed only for "xxx001". When there are a plurality of terminal devices 3 associated with the user 1, it may be determined that data communication can be performed with a plurality of terminal devices 3, based on the determination processing. In this case, a plurality of terminal devices 3 may be displayed on the operation screen as the terminal devices 3 selectable by the user.

### <Description of program>

The processing executed by the image processing apparatus 2 according to the present exemplary embodiment described above is prepared as, for example, a program such as software. A program for realizing the present exemplary embodiment can be provided not only by a communication unit but also by being stored in a recording medium such as a CD-ROM.

Although the exemplary embodiments of the present disclosure have been described above, the technical scope of the present disclosure is not limited to the above-described exemplary embodiments. Various modifications and alternative configurations not departing from the scope of the technical idea of the present disclosure are included in the present disclosure. The present disclosure can also be applied to a program and a program product.

### Appendix

(((1))) A communication control device comprising a processor configured to:
   when the communication control device recognizes an external device via one network under an environment including a plurality of networks, identify the one network among the plurality of networks as a network used for communication between the communication control device and the external device; and
   enable data communication with the external device based on information on a user that performs the data communication with the external device and the one network identified.
(((2))) The communication control device according to (((1))), wherein the processor is configured to make a storage device store information on the external device recognized and the one network identified in association with each other.
(((3))) The communication control device according to (((1))) or (((2))), wherein the processor is configured to determine whether the data communication is able to be performed, based on information on a network associated with the user that performs the data communication with the external device, and the one network identified.
(((4))) The communication control device according to any one of (((1))) to (((3))), wherein the processor is configured to determine that the data communication is able to be performed when the one network identified is included in the network associated with the user that performs the data communication with the external device.
(((5))) The communication control device according to any one of (((1))) to (((4))), wherein the processor is configured to output, regarding the external device connected to a network associated with the user that performs the data communication with the external device, information for identifying the external device and a content of processing in the external device.
(((6))) The communication control device according to any one of (((1))) to (((5))), wherein the processor is configured to output, regarding the external device associated with a user that has logged in to the communication control device, information for identifying the external device and a content of processing in the external device.
(((7))) An image processing apparatus comprising:
   the communication control device according to any one of (((1))) to (((6))); and
   an image reading device.
(((8))) A program causing a computer configured to control an image processing apparatus to execute process comprising:
   when the image processing apparatus recognizes an external device via one network under an environment including a plurality of networks, identifying the one network among the plurality of networks as a network used for communication between the image processing apparatus and the external device; and
   enabling data communication with the external device based on information on a user that performs the data communication with the external device and the one network identified.

According to (((1))) of the present disclosure, as compared with a case where the external device is provided with a unit for transmitting network information for identifying a network via which the communication control device is connected to the external device, a network serving as a communication destination can be selected without receipt of the network information from the external device.

According to (((2))) of the present disclosure, a step of a process related to data communication can be omitted, as compared with a case where the network information is acquired when data communication is performed.

According to (((3))) of the present disclosure, the external device capable of performing data communication with the communication control device can be distinguished.

According to (((4))) of the present disclosure, the external device capable of performing data communication with the communication control device can be distinguished based on the network associated with the user that performs data communication with the external device.

According to (((5))) of the present disclosure, only the external device connected to the network associated with the user that performs data communication with the external device can be displayed.

According to (((6))) of the present disclosure, only the external device associated with the user that performs data communication with the external device can be displayed.

According to (((7))) of the present disclosure, the image processing apparatus can be provided which is capable of, as compared with a case where the external device is provided with a unit for transmitting network information for identifying a network via which the communication control device is connected to the external device, selecting a network serving as a communication destination without receipt of the network information from the external device.

According to (((8))) of the present disclosure, in a computer on which the program of (((8))) of the present disclosure is installed, as compared with a case where the external device is provided with a unit for transmitting network information for identifying a network via which the image processing apparatus is connected to the external device, a network serving as a communication destination can be selected without receipt of the network information from the external device.

## Claims

1. A communication control device comprising a processor configured to:
when the communication control device recognizes an external device via one network under an environment including a plurality of networks, identify the one network among the plurality of networks as a network used for communication between the communication control device and the external device; and
enable data communication with the external device based on information on a user that performs the data communication with the external device and the one network identified.

2. The communication control device according to claim 1, wherein the processor is configured to make a storage device store information on the external device recognized and the one network identified in association with each other.

3. The communication control device according to claim 1 or 2, wherein the processor is configured to determine whether the data communication is able to be performed, based on information on a network associated with the user that performs the data communication with the external device, and the one network identified.

4. The communication control device according to any one of claims 1 to 3, wherein the processor is configured to determine that the data communication is able to be performed when the one network identified is included in the network associated with the user that performs the data communication with the external device.

5. The communication control device according to any one of claims 1 to 4, wherein the processor is configured to output, regarding the external device connected to a network associated with the user that performs the data communication with the external device, information for identifying the external device and a content of processing in the external device.

6. The communication control device according to any one of claims 1 to 5, wherein the processor is configured to output, regarding the external device associated with a user that has logged in to the communication control device, information for identifying the external device and a content of processing in the external device.

7. An image processing apparatus comprising:
the communication control device according to any one of claims 1 to 6; and
an image reading device.

8. A program causing a computer configured to control an image processing apparatus to execute process comprising:
when the image processing apparatus recognizes an external device via one network under an environment including a plurality of networks, identifying the one network among the plurality of networks as a network used for communication between the image processing apparatus and the external device; and
enabling data communication with the external device based on information on a user that performs the data communication with the external device and the one network identified.
